# FASCICULE DE BREVET EUROPEEN

(11) **EP 3 948 075 B1**
(45) Date de publication et mention de la délivrance du brevet: **30.08.2023**
(21) Numéro de dépôt: 20720744.0
(22) Date de dépôt: 03.04.2020
(51) Int. Cl.: F23B 50/12, F23B 20/00, F23B 60/02, F24B 5/02, F23L 1/00, F23L 9/02, F23L 9/04, F24H 3/00, F24H 9/00

(54) **DISPOSITIF DE CHAUFFAGE À COMBUSTION POUR LUTTER CONTRE LE GEL TARDIF OU TOUTES AUTRES MENACES DANS LES VIGNES, VERGERS ET CULTURES**
VERBRENNUNGSHEIZGERÄT ZUR VERMEIDUNG VON SPÄTEM FROST ODER SONSTIGEN BEDROHUNG VON WEINGÄRTEN, OBSTGÄRTEN UND NUTZPFLANZEN
COMBUSTION HEATER FOR PREVENTING SPRING FROST OR ANY OTHER THREAT TO VINEYARDS, ORCHARDS AND CROPS

(30) Priorité: 04.04.2019 FR 1903622; 14.10.2019 FR 1911395
(43) Date de publication de la demande: 09.02.2022
(73) Titulaire: Gros, Claude, 31270 Frouzins (FR)
(72) Inventeur: Gros, Claude, 31270 Frouzins (FR)
(74) Mandataire: Novagraaf Technologies
(86) Numéro de dépôt international: PCT/EP2020/059531
(87) Numéro de publication internationale: WO 2020/201494

(56) Documents cités:
- EP-A2- 1 300 631
- WO-A1-2017/179904
- KR-A- 20180 027 775
- US-A1- 2010 242 941
- US-B1- 8 627 775

## Description

### Domaine technique de l'invention

La présente invention concerne un dispositif de chauffage à combustion. L'invention concerne également une utilisation et un procédé d'allumage du dispositif de chauffage pour générer de la chaleur à partir d'un combustible, de préférence un combustible à base de biomasse.

En particulier, le dispositif de chauffage selon l'invention et l'utilisation de ce dispositif sont destinés à lutter contre le gel tardif ou toutes autres menaces dans les vignes, vergers et cultures.

### Présentation du problème technique

A chaque arrivée du printemps, dans les vignes, les maraîchages ou les zones d'arbres fruitiers, les gelées de printemps provoquent des ravages dans la période de montée de la sève, encore appelée la période du « bourgeonnage », soit en avril et mai pour la zone de l'Europe de l'Ouest (Allemagne, Espagne, France, Italie, Suisse et Portugal). Le phénomène est semblable dans les pays de l'hémisphère sud de la zone tempérée en octobre et novembre.

La plupart des exploitations agricoles, pour se protéger d'un évènement difficilement pris en charge par les assurances, font appel à des techniques de protection.

Les dispositifs existants à l'heure actuelle, sont le brassage de l'air par éolienne, l'utilisation d'hélicoptère, l'arrosage intensif (1m³ d'eau par seconde), la mise en place de bidon de paraffine en feu (400 à 500 bidons de 15 kg par hectare) et les traditionnels brûleurs à gaz et autre chaufferette au fuel. Ce sont autant de systèmes qui, indépendamment de leur efficacité toute relative, sont forts coûteux en exploitation.

Au vu de ces problèmes, un objectif de l'invention est de proposer une conception permettant de protéger de manière efficace des zones de culture ou d'arboriculture des risques de gel saisonnier, tout étant peu coûteux et simple à mettre en place.

On connaît des dispositifs tels que ceux qui sont décrits dans les documents US2010/242941A1, KR20180027775A, US8627775B1. Le document US2010/242941A1 montre un dispositif de chauffage selon le préambule de la revendication 1.

### Résumé de l'invention

Avec cet objectif en vue, l'invention propose un dispositif de chauffage à combustion comprenant :
- une chambre de combustion,
- un réceptacle disposé dans la chambre de combustion et comprenant une enceinte destinée à contenir une matière combustible, ladite enceinte formant un foyer du dispositif de chauffage, et
- un conduit d'échappement communiquant avec la chambre de combustion. Dans le dispositif de chauffage, un gaz de combustion formé de la combustion de la matière combustible circulant du foyer vers le conduit d'échappement selon une direction de circulation de l'amont vers l'aval. Selon l'invention, le réceptacle comprend une face amont et une face avale et chacune desdites faces comprenant des ouvertures traversantes. De plus, la chambre de combustion comprend une première paroi disposée en vis-à-vis de la face amont et comprenant une première zone d'échange d'air entre l'extérieur et l'intérieur du dispositif de chauffage. Enfin, le réceptacle comprend une surface définissant au moins un côté d'un canal d'air dans lequel circule l'air provenant de la première zone d'échange d'air.

En d'autres termes, la première zone d'échange d'air est ici une entrée d'air permettant d'introduire de l'oxygène dans le dispositif de chauffage, en particulier dans la chambre de combustion. Autrement dit, grâce à cette première zone d'échange, l'oxygène est fourni en quantité suffisante dans le dispositif de chauffage pour réaliser la combustion.

De plus, la présence du canal d'air accroît la circulation d'air dans le dispositif de chauffage, ce qui garantit une combustion de bonne qualité permettant de générer une forte chaleur protectrice des zones de culture ou d'arboriculture. Une telle combustion permet en outre de diminuer la fumée et de réduire des molécules nocifs présents dans les gaz de combustion en molécules inoffensives et/ou présentant peu d'impact sur l'environnement.

Par ailleurs, le conduit d'échappement permet de diffuser largement la chaleur générée par la combustion dans la zone de culture ou d'arboriculture pour lutter contre les risques de gel, présents notamment à l'arrivée du printemps.

Enfin, le dispositif de chauffage tel que décrit est simple à mettre en place et ne nécessite pas de moyens coûteux pour sa fabrication et sa mise en oeuvre.

A titre d'exemple, le réceptacle est réalisé en métal qui résiste à des températures élevées, par exemple à des températures égales ou supérieures à 300°C. Le réceptacle est encore appelé « brûleur » dans le vocabulaire de l'homme du métier.

Suivant différents modes de réalisation, l'invention comprend une ou plusieurs des caractéristiques suivantes qui peuvent être utilisées séparément ou en combinaison partielle entre elles ou en combinaison totale entre elles.

Par exemple, le dispositif de chauffage une deuxième zone d'échange d'air entre l'extérieur et l'intérieur du dispositif de chauffage, ladite deuxième zone d'échange étant pratiquée sur une deuxième paroi de la chambre de combustion et située en aval du réceptacle.

Ainsi, la deuxième zone d'échange d'air permet l'arrivée d'un air secondaire venant alimenter la partie intérieure de chambre de combustion. L'arrivée de l'air secondaire peut être au niveau de la première zone d'échange ou de la deuxième zone d'échange, ou de ces deux zones. Cet air secondaire crée une régénération de combustion par un apport en oxygène.

Selon un exemple de réalisation, le dispositif de chauffage comprend une troisième zone d'échange d'air entre l'extérieur et l'intérieur du dispositif de chauffage, ladite troisième zone d'échange étant pratiquée sur le conduit d'échappement ou sur une paroi de la chambre de combustion différente de la première paroi.

De cette manière, la troisième zone d'échange apporte une quantité d'oxygène supplémentaire qui réagit avec les gaz de combustion juste avant la sortie du dispositif. Cette réaction permet de réduire, voire supprimer, la fumée dégagée de la combustion. Ceci crée ainsi une combustion optimisée sans aucune fumée.

A titre d'exemple, chaque zone d'échange d'air comprend plusieurs orifices et/ ou fentes traversantes.

Selon un exemple de l'invention, le réceptacle comprend une barre reliant la face amont à la face avale, présentant une section transversale en U ou en V inversée, et définissant le canal d'air.

Alternativement, le réceptacle présente une section rectangulaire et la chambre de combustion présente une section transversale circulaire. Dans ce cas, la demi-diagonale de la section rectangulaire du réceptacle est inférieure au rayon de la section circulaire de la chambre de combustion. L'espace entre la section du réceptacle et la section circulaire de la chambre de combustion définissent le canal d'air.

Selon un exemple de réalisation, le conduit d'échappement comprend une première extrémité orientée vers la chambre de combustion et une deuxième extrémité libre, opposée à la première extrémité. Le dispositif comprend un organe de rayonnement de chaleur attaché au conduit d'échappement et situé au-dessus de la deuxième extrémité libre du conduit d'échappement. Ainsi, l'organe de rayonnement permet de diffuser de manière plus efficace la chaleur générée par la combustion et d'atteindre ainsi une plus grande surface dans la zone à protéger.

Selon un autre exemple de réalisation, le dispositif comprend un support sur lequel est posée la chambre de combustion. Ainsi, le support est utilisé comme un moyen de mise à niveau permettant de conserver la stabilité et le niveau plan du dispositif de chauffage sur tout type de terrain, notamment sur un terrain pentu. Ceci assure un bon fonctionnement du dispositif de chauffage pendant la combustion.

Selon le paragraphe précédent, le support est équipé des pieds réglables en hauteur. Ainsi, l'ensemble du dispositif peut être incliné par rapport à la conformité du terrain de 0° à 45° en réglant la hauteur des pieds.

Selon un exemple de réalisation, le dispositif de chauffage comprend une trémie d'alimentation communiquant avec la chambre de combustion via l'entrée d'alimentation. La trémie d'alimentation facilite le remplissage de la chambre de combustion en combustible. En outre, la trémie d'alimentation peut servir d'espace de stockage du combustible, ce qui prolonge la durée d'utilisation du dispositif de chauffage.

Selon un exemple de réalisation, le dispositif de chauffage comprend un organe de mise à feu électrique et/ou électronique, ledit organe comprenant un allume-feu et un moyen d'activation de l'allume-feu. Ceci permet un gain de temps dans la mise en marche du dispositif. Il suffit d'actionner l'organe de mise à feu pour enflammer le combustible. On évite donc un allumage manuel qui prend du temps et présente parfois des risques de brûlures. Selon le paragraphe précédent, l'organe de mise à feu comprend un moyen de télécommunication recevant des signaux de commande d'un terminal, et une centrale de commande.

Le terminal ici est un appareil électronique ayant accès à des réseaux de télécommunication afin d'envoyer des commandes à l'organe de mise à feu. Le terminal peut être par exemple un ordinateur ou un téléphone portable connecté au réseau d'internet, de Bluetooth, Zigbee, et autre.

Le calculateur fait démarrer le moyen d'activation de l'allume-feu suite au signal de commande reçu par le moyen de télécommunication.

L'organe de mise à feu connecté permet en temps réel et directement de réagir aux menaces climatiques pesant sur les cultures, en fonction des données de température et d'hygrométrie à disposition de l'utilisateur. En d'autres termes, l'organe de mise à feu permet d'éviter des dégâts causés par les aléas climatiques.

Selon un exemple de réalisation, l'organe de mise à feu comprend un capteur de température et d'hygrométrie communiquant avec la centrale de commande.

Ainsi, la centrale de commande peut déclencher automatiquement la production de chaleur en fonction de données de température et d'hygrométrie du capteur.

Selon un exemple de réalisation, le moyen d'activation de l'allume-feu comprend un activateur électrique générant de la chaleur par effet joule et un élément inflammable sous l'effet de la chaleur. L'activateur électrique peut être une résistance électrique. L'élément inflammable peut se présenter sous forme d'une pastille encapsulant des composants chimique inflammable sensible à la chaleur. Ce type de pastille est souvent utilisé dans le domaine pyrotechnique.

Un autre objet de l'invention concerne un procédé d'allumage d'un dispositif de chauffage selon l'invention. Ce dernier comprend un organe de mise à feu électrique et/ou électronique comprenant un allume-feu, un moyen d'activation de l'allume-feu, un moyen de télécommunication destiné à recevoir des signaux de commande d'un terminal, et une centrale de commande.

Selon l'invention, le procédé comprend les étapes suivantes :
- réception des signaux de commande d'un terminal par le moyen de communication;
- traitement des signaux de commande par la centrale de commande ;
- démarrage du moyen d'activation de l'allume-feu par la centrale de commande ; et
- allumage de l'allume-feu par ledit moyen d'activation.

Un autre objet de l'invention concerne un procédé d'allumage d'un dispositif de chauffage selon l'invention. Ce dernier comprend un organe de mise à feu électrique et/ou électronique comprenant un allume-feu, un moyen d'activation de l'allume-feu, un moyen de télécommunication destiné à recevoir des signaux de commande d'un terminal, une centrale de commande et un capteur un capteur de température et d'hygrométrie communiquant avec la centrale de commande.

Selon l'invention, le procédé d'allumage comprend les étapes suivantes :
- récupération et traitement des données du capteur de température et d'hygrométrie par la centrale de commande ;
- en fonction desdites données, démarrage du moyen d'activation de l'allume-feu par la centrale de commande ; et
- allumage de l'allume-feu par ledit moyen d'activation.

Ainsi, grâce aux procédés décrits précédemment, la mise en marche du dispositif de chauffage peut être réalisés soit à distance, soit de manière automatique, ce qui permet de réagir de manière plus rapide, et donc plus efficace, face au changement du temps afin de protéger les zones de culture ou d'arboriculture

Un dernier objet de l'invention concerne l'utilisation du dispositif de chauffage à combustion selon l'invention en mettant en combustion un combustible pour produire de la chaleur protectrice des vignes, des maraîchages ou des zones d'arbre fruitiers contre des gelées saisonnières.

Plus précisément, l'utilisation du dispositif de chauffage est particulièrement destiné à la protection de toutes cultures soumises au risque de gel tardif de printemps, en période de floraison, ainsi que la protection de semis, de leur accroissement, de même que la protection de semis et de jeunes plans sous serres ventilées à toute saison.

Selon les deux paragraphes précédents, le combustible utilisé est à base de biomasse.

Par définition, la biomasse regroupe un ensemble de matériaux d'origine végétale, naturelle ou cultivée de la surface du globe terrestre.

A titre d'exemple, le combustible à base de biomasse est produit par les plantations et les cultures à protéger. En effet, chaque année, lors des différentes phases de taille, la récupération de bois mort génère un potentiel énergétique réutilisé sous forme de broyats ou granulés, ce qui aide à la gestion des déchets issus de la plantation.

Par ailleurs, tout type de combustible entrant dans la catégorie de l'énergie issue de la biomasse est également accepté. Par exemple, on peut utiliser des plaquettes forestières ou industrielles, des pellets, de agro-pellets comprenant le noyau d'olive, la coque des fruits à coque.

Le combustible à base de biomasse est une source d'énergie renouvelable, écologique, ce qui génère un impact carbone et environnement positif tout en utilisant la combustion pour produire la chaleur protectrice.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique et en perspectif d'un dispositif de chauffage à combustion selon un premier exemple de réalisation de l'invention ;
[Fig.2] - la figure 2 est une vue de face d'un réceptacle faisant partie du dispositif de chauffage de la figure 1 ;
[Fig.3] - la figure 3 est une vue de côté du réceptacle de la figure 2 ;
[Fig.4] - la figure 4 est une vue de dessus du réceptacle de la figure 2 ;
[Fig. 5] - la figure 5 est une vue en plan et éclaté d'un dispositif de chauffage selon un deuxième exemple de réalisation de l'invention.
[Fig.6] - la figure 6 est une en perspective d'un dispositif de chauffage selon un troisième exemple de réalisation de l'invention ;
[Fig.7]- la figure 7 est une vue en perspective d'un premier manchon de fixation d'une trémie d'alimentation à une chambre de combustion du dispositif de la figure 6 ;
[Fig.8]- la figure 8 est une vue en perspective d'un deuxième manchon de fixation d'un conduit d'échappement à la chambre de combustion du dispositif de chauffage de la figure 6 :
[Fig.9]- la figure 9 est une vue en perspective d'un réceptacle du dispositif de chauffage de la figure 6 ; et
[Fig. 10]- la figure 10 est une vue de face d'une partie inférieure du dispositif de chauffage de la figure 6.

### Description détaillée de l'invention

Dans la description qui va suivre, des éléments identiques, similaires ou analogues seront désignés par les mêmes chiffres de référence.

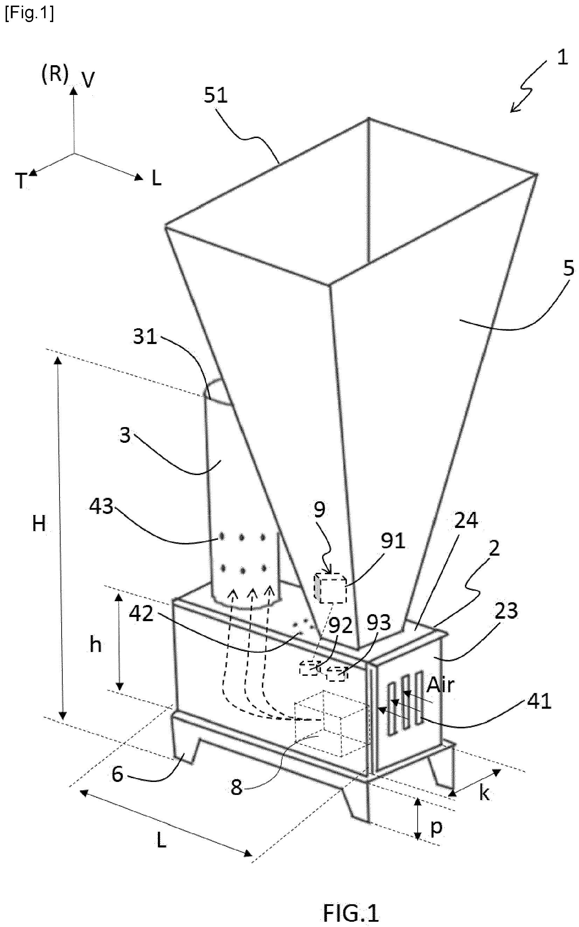

Dans la description qui va suivre, pour un souci de clarté, nous définissons un repère R constitué de trois axes dont un axe longitudinal L, un axe transversal T et un axe vertical V. Le repère R est illustré au moins en partie par exemple sur les figure 1, 3, 6, 10.

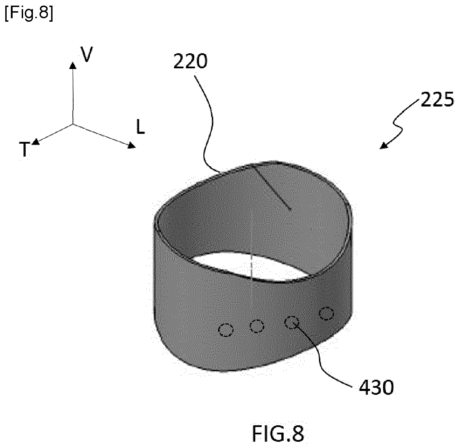

Ici, l'axe longitudinal L est parallèle à l'horizontal, l'axe transversal est parallèle à l'horizontal et perpendiculaire à l'axe longitudinal L. L'axe vertical V est perpendiculaire aux deux autres axes. Les termes « haut » et « bas » sont définis par rapport à l'axe vertical V et correspondent respectivement au haut et au bas des figures 1 à 10. Par ailleurs, les termes « gauche » et « droit », ainsi que leurs dérivés, correspondent à la gauche et à la droite des figures 1 à 10.

Enfin, les termes « amont » et « aval » sont définis par rapport au sens de circulation du gaz de combustion dans le dispositif de chauffage.

### Premier exemple de réalisation

En référence à la figure 1, un dispositif de chauffage à combustion 1 selon premier un exemple de réalisation de l'invention est destiné à la protection des exploitations agricoles, notamment des vignes, contre des gelées saisonnières et en particulier des gelées printanières. Dans l'application du dispositif de chauffage à combustion 1 pour protéger les vignes, ce dispositif est encore appelé chaufferette. Pour son utilisation, le dispositif de chauffage est posé dans la zone à protéger, sur le sol, entre deux rangées adjacentes de vignes.

Dans l'exemple illustré, le dispositif de chauffage à combustion 1 utilise une matière combustible à base de biomasse pour son impact de carbone et environnemental positif. La matière combustible est appelé ci-après un combustible.

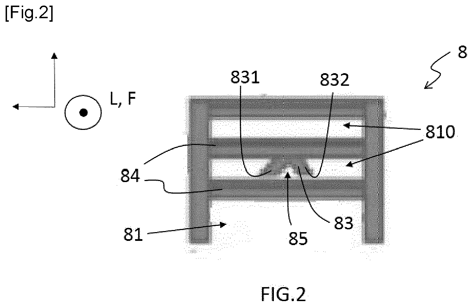

Le dispositif de chauffage 1 comprend ici une chambre de combustion 2 équipée d'une entrée d'alimentation 21 et d'une sortie 22. L'entrée 21 et la sortie 22 sont visibles sur la figure 2.

Le combustible est introduit dans la chambre de combustion 2 via l'entrée d'alimentation 21.

La chambre de combustion 2 comprend en outre un accès pratiquée sur une première paroi 23 de la chambre 2. Ici, la première paroi est une paroi axiale gauche 23. L'accès est fermé par un volet 25 tournant autour d'une charnière horizontale. L'accès permet à un utilisateur d'accéder à l'intérieur de chambre de combustion 2 et d'évacuer des cendres par cet accès.

Ici, à titre illustratif et non limitatif, la chambre de combustion présente une longueur L de 500 mm, une largeur k de 200 mm et une hauteur h de 200 mm.

Dans l'exemple illustré, le combustible est alimenté dans la chambre de combustion au moyen d'une trémie d'alimentation 5. La trémie d'alimentation 5 ayant la forme d'un entonnoir permet de mieux guider le flux du combustible et d'éviter des pertes de combustible pendant le remplissage de chambre 2.

De plus, la trémie 5 peut servir d'espace stockage de combustible lorsque la chambre de combustion 2 est pleine. Dans ce cas, la trémie 5 a un accès permanent à la chambre de combustion 2 de sorte que le poids de la colonne du combustible stocké dans la trémie 5 exerce un effort sur le combustible dans la chambre de combustion afin de rendre le combustible dans la chambre suffisamment compact. Par ailleurs, la trémie 5 alimente en continu la chambre de combustion, ce qui permet une longue durée de chauffage pour une efficacité maximale.

Selon un exemple, la trémie est conçue de manière à pouvoir contenir un volume de combustible à base de biomasse de type granulé de bois, présentant un poids sensiblement égal à 20 kilogrammes et assurant une combustion à minima de huit heures.

Dans l'exemple illustré, la trémie d'alimentation 5 comprend une ouverture 51 située en haut et dans laquelle est versé le combustible. La trémie 5 comprend aussi une sortie 52 située à l'opposé de l'ouverture 51. La sortie 52 est en communication avec l'entrée d'alimentation 21.

Par ailleurs, dans l'exemple illustré, la trémie 5 comprend un couvercle 53 posé sur l'ouverture 51 après que le remplissage du combustible soit terminé. Le couvercle 53 a pour but de protéger le combustible de l'humidité et d'autres facteurs environnementaux pouvant altérer la qualité du combustible et pouvant donc baisser l'efficacité de la combustion.

Dans un exemple, afin d'améliorer l'étanchéité dans la trémie lorsque celui-ci est fermé par le couvercle 53, un joint d'étanchéité peut être prévu sur le couvercle 53.

Pendant la combustion, les chaleurs générées de cette réaction circulent de la chambre de combustion vers la sortie 22 et puis dans un conduit d'échappement 3. Ici, le conduit d'échappement 3 est emmanché dans la sortie 22.

Dans cet exemple, le conduit d'échappement 3 présente une forme cylindrique et s'étend verticalement. La hauteur du conduit d'échappement 3 est adaptée à la taille des vignes, de sorte que la chaleur puisse être diffusée au-dessus des vignes.

Dans l'exemple illustré, l'ensemble de la chambre de combustion 2, de la trémie 5 et du conduit d'échappement 3 est mis sur un support 6. Le support 6 permet de surélever la chambre de combustion 2 par rapport au sol, ce qui permet une meilleure évacuation de la chaleur en-dessous de la chambre de combustion. A titre d'exemple, la hauteur p du support 6 est comprise entre 60 mm et 100 mm, de préférence de 80 mm.

En outre, le support 6 peut comprendre des pieds réglables en hauteur qui peuvent être adaptés au profil du terrain sur lequel est posé le dispositif de chauffage de sorte que l'ensemble soit stable et parallèle à l'horizontal. Dans un autre exemple, les pieds réglables en hauteur peuvent mettre l'ensemble dans une position inclinée par rapport au sol.

Comme illustré sur la figure 1, le dispositif de chauffage 1 comprend un organe de mise à feu 9 électrique et électronique.

Dans cet exemple, l'organe de mise à feu 9 comprend un boîtier de commande 91 qui contient un moyen de télécommunication et une centrale de commande.

Ici, le moyen de télécommunication a pour fonction de recevoir des signaux de commande émis par un terminal et d'émettre des signaux d'information au terminal. Un terminal peut être un téléphone portable ou un ordinateur ayant accès à un réseau de télécommunication. Le moyen de télécommunication sert également d'informer l'utilisateur du terminal la position du dispositif de chauffage, les conditions de combustion, et d'autres informations utiles.

A titre d'exemple, la position du dispositif de chauffage peut être déterminée par un système de positionnement par satellite, encore appelé système GPS pour « Global Positionning System » en anglais. Les conditions liées à la combustion peuvent être déterminées au moyen des capteurs de mesure, tels qu'un capteur de température et d'hygrométrie. Le système GPS ainsi que les capteurs de mesure peuvent être mis dans le boîtier de commande 91.

Le traitement des signaux de commande et des signaux d'information est réalisé par la centrale de commande. En effet, en analysant des signaux de commande venant d'un téléphone ou d'un ordinateur, ladite centrale active des éléments nécessaires dans l'organe de mis à feu 9 pour mettre en route la combustion. Par ailleurs, la centrale de commande regroupe les données mesurés par les capteurs et le système GPS et fait envoyer ces informations au terminal. Ainsi, l'utilisateur peut suivre à distance la combustion et retrouver facilement l'endroit où est posé le dispositif de chauffage.

Les éléments précités sur boîtier de commande 91 peuvent résister à des températures égales ou inférieures à 50°C.

L'organe de mise à feu 9 comprend en outre un allume-feu 93 et un moyen d'activation de l'allume-feu 92. Ici, ces deux éléments sont installés dans la chambre de combustion 2.

A titre d'exemple, le moyen d'activation de l'allume-feu 92 comprend une résistance électrique qui convertit l'énergie électrique en chaleur par effet Joule. Une batterie est placée à proximité du boîtier de commande 91 pour fournir de l'énergie électrique à la résistance électrique.

Le moyen d'activation 92 comprend en outre une pastille chimique contenant des composants chimiques qui s'enflamme sous l'effet de la chaleur.

Dans cet exemple, l'allume-feu 93 utilisé est de type laine de bois.

Lorsque le moyen de télécommunication reçoit un signal de commande pour allumer le feu, la centrale de commande fait démarrer la résistance électrique. De manière alternative, la centrale de commande peut faire démarrer la résistance électrique suite aux données du capteur de température et d'hygrométrie, sans avoir besoin d'intervention à distance de l'utilisateur.

Suite à l'ordre de la centrale de commande, l'activateur électrique s'échauffe et procure de la chaleur provoquant l'échauffement de la pastille chimique jusqu'à ce qu'il y ait un départ de feu. Ce départ de feu enflamme l'allume-feu 93, ce qui permet ensuite le démarrage de la combustion du combustible à base de biomasse.

Ainsi, l'organe de mise à feu 9 permet une gestion automatique et un contrôle à distance de la combustion du dispositif de chauffage en fonction des relevés météorologiques. Le dispositif de chauffage est donc plus réactif et réagit de manière plus rapide et efficace par rapport à des systèmes de chauffage existants qui sont actionnés manuellement.

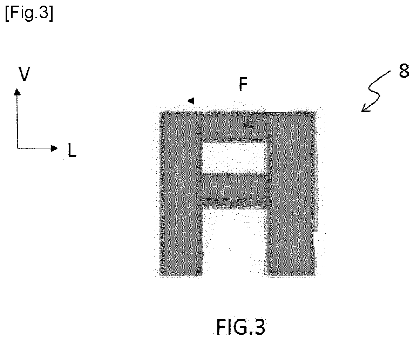

Selon l'invention et comme dans le premier exemple de réalisation, le dispositif de chauffage 1 comprend un réceptacle 8 disposé dans la chambre de combustion 2, précisément, en dessous de l'entrée d'alimentation 21. Une première variante du réceptacle 8 est illustrée sur les figures 3 à 5. Selon cette première variante, le réceptacle 8 comprend quatre faces s'étendant sensiblement selon l'axe vertical V.

Précisément, le réceptacle 8 comprend ici une face amont 81 et une face 82 aval opposées l'une à l'autre et perpendiculaires toutes les deux à l'axe longitudinal L. Le réceptacle 8 comprend aussi une troisième face 84 et une quatrième face 85 opposées l'une à l'autre et perpendiculaires toutes les deux à l'axe transversal T. Les quatre faces du réceptacle 8 délimitent une enceinte 80. Celle-ci est remplie de combustible et forme ainsi le foyer du dispositif de chauffage pendant le fonctionnement du dispositif. Ici, l'enceinte 80 est située en vis-à-vis de l'entrée d'alimentation 21.

En outre, les quatre faces du réceptacle permettent de maintenir le combustible dans l'enceinte 80 sous forme d'un bloc compact.

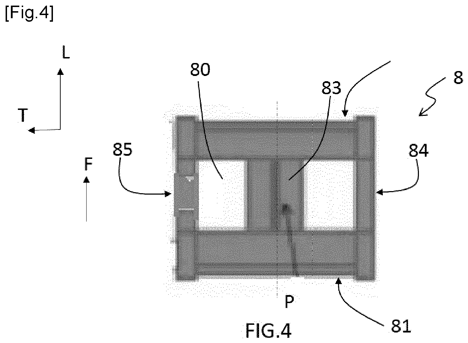

Ici, les faces amont et aval 81 et 82 sont symétriques en miroir par rapport à un plan P vertical passant par le milieu des autres faces 84 et 85. Le plan P est illustré sur la figure 4. Chacune des faces amont et aval 81 et 82 comprend des plaques 84 s'étendant selon l'axe longitudinal L et inclinées vers le bas. Cette inclinaison des plaques 84 permet d'éviter l'échappement du combustible vers l'extérieur de l'enceinte 80. Les plaques 84 dirigent le combustible vers le bas et vers l'intérieur du réceptacle 8.

Par ailleurs, les plaques 84 sont parallèles les unes par rapport aux autres et distancées les unes des autres. Comme illustré sur la figure 2, une ouverture traversante 810 est définie entre deux plaques 84 adjacentes. Les ouvertures traversantes 810 permet un passage d'air à travers le bloc de combustible. Dans l'exemple illustré, le réceptacle 8 comprend en outre une barre 83 s'étendant selon l'axe longitudinal L et reliant la face amont 81 à la face aval 82. Cette barre 83 longitudinale présente ici une section transversale en V inversée. En d'autres termes, la section en V est ouverte en direction du sol.

La surface interne de la barre 83, c'est-à-dire la surface orientée vers l'intérieur des deux ailes 831 et 832 du V, définit un canal d'air 85 dans lequel circule l'air venant de l'extérieur. Les deux ailes du V de la barre 83 empêchent le combustible d'obstruer ce canal d'air, ce qui garantit une circulation libre de l'air dans la chambre de combustion 2.

La circulation d'air est ainsi facilitée, ce qui améliore la combustion dans la chambre de combustion 2.

Afin de favoriser l'arrivée d'air dans le réceptacle 8, celui-ci est placé dans la chambre de combustion de manière ce que la face amont 81 soit en vis-à-vis d'une première paroi 23 de la chambre de combustion 2, qui comprend une première zone d'échange d'air 41.

Ici, la première zone d'échange d'air 41 comprend une pluralité de fentes traversantes. Grâce à ces fentes, l'air de l'extérieur peut entrer dans la chambre de combustion 2 et atteindre rapidement la face amont 81 du réceptacle 8. L'air de l'extérieur traverse ensuite le bloc de combustible en passant par les ouvertures traversantes 810.

Pendant la combustion, le déplacement du gaz de combustion et de la chaleur au sein de la chambre 2 vers le conduit d'échappement fait un appel d'air de l'extérieur via la première zone d'échange d'air 41. De plus, comme expliqué précédemment, la circulation d'air est facilité par la présence du canal d'air 85, et ce dans une direction de la face amont 81 vers la face aval 82 du réceptacle 8.

Ainsi, avec un apport oxygène, la première zone d'échange 41 rend la combustion plus performante, ce qui permet de générer plus de chaleur à distribuer.

Dans l'exemple illustré, le dispositif de chauffage comprend une deuxième zone d'échange d'air 42 entre l'intérieur et l'extérieur du dispositif. Ici, la deuxième zone d'échange d'air 42 est pratiquée sur une deuxième paroi 24 de la chambre de combustion 2. Dans cet exemple, la deuxième paroi 24 est une paroi latérale supérieure.

La deuxième zone d'échange d'air 42 comprend plusieurs orifices traversantes situées en aval du réceptacle 8. La deuxième zone d'échange 42 participe activement à une deuxième phase de combustion.

En effet, pendant une première phase de combustion réalisée avec un apport d'oxygène via la première zone d'échange 41, l'air à l'intérieur de la chambre de combustion est chauffé sous l'effet de la chaleur générée de la combustion. Dans la deuxième phase de combustion, cet air chaud se dilate et occupe un volume de plus en plus important dans la chambre 2 jusqu'à atteindre la deuxième zone d'échange 42 par laquelle l'air chaud s'échappe vers l'extérieur. Suite à l'échappement de l'air chaud, un phénomène d'aspiration de l'air frais à l'extérieur du dispositif de chauffage se produit. Cette aspiration fait entrer davantage d'air extérieur dans la chambre de combustion via la première zone d'échange 41 et/ou la deuxième zone d'échange 42. Ainsi, la combustion est davantage dynamisée afin de fournir plus de chaleur, ce qui rend le dispositif de chauffage encore plus performant.

Par ailleurs, cet apport d'air supplémentaire permet de transformer les gaz de combustion en gaz inoffensifs, ce qui réduit le rejet des polluants par le dispositif de chauffage.

Comme illustré sur la figure 1, le dispositif de chauffage 1 comprend en outre une troisième zone d'échange d'air 43 entre l'intérieur et l'extérieur du dispositif. Ici, la troisième zone d'échange d'air 43 comprend plusieurs ouïes traversantes pratiquées sur le conduit d'échappement 3. La troisième zone d'échange d'air 43 permet un nouvel apport en oxygène qui transforme les gaz de combustion résiduels qui arrivent dans le conduit d'échappement 3. Ceci permet de créer une combustion optimisée sans fumée.

Les deuxième et troisième zones d'échanges d'air 42 et 43 s'ajoutent à la première zone d'échange d'air 41 pour créer un environnement propice à une combustion puissante en apportant une quantité abondante d'oxygène sans avoir besoin d'une hauteur importante du conduit d'échappement. En d'autres termes, la présence des trois zones d'échange d'air permet une conception du conduit d'échappement adapté à la zone de culture, notamment au champ de vignes.

### Deuxième exemple de réalisation

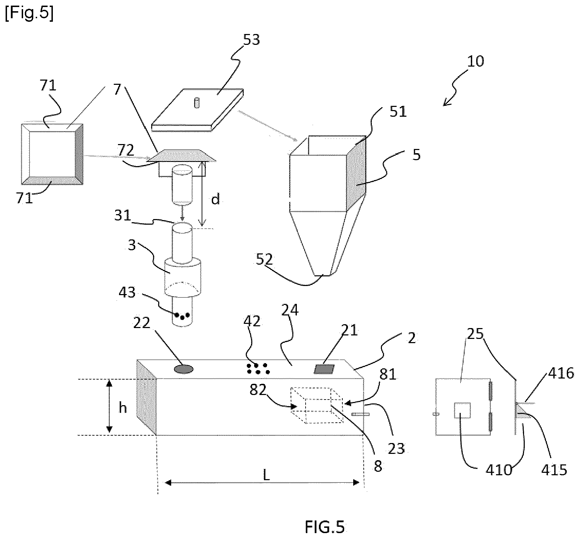

La figure 5 illustre un dispositif de chauffage 10 selon un deuxième exemple de réalisation de l'invention. Le dispositif de chauffage 10 comprend les éléments similaires ou identiques à ceux illustrés dans le premier exemple de réalisation. La différence entre les deux exemples de réalisation réside dans la forme de quelques éléments du dispositif de chauffage.

En effet, dans le deuxième exemple de réalisation, la trémie d'alimentation 5 présente un tronçon supérieur ayant une section carrée et un tronçon inférieur ayant une section tronconique. Le conduit d'échappement 3 est formé de plusieurs tubes assemblés les uns avec les autres.

Dans le deuxième exemple de réalisation, la paroi latérale gauche 23 comprend le volet 25 tournant autour d'une charnière verticale. Une ouverture rectangulaire 415 est réalisée sur le volet 25 et fermée par une porte rotative 416. L'ensemble de l'ouverture rectangulaire 415 et de la porte rotative 416 forme la première zone d'échange d'air 410. Les deuxième et troisième zones d'échange d'air 41 et 42 restent identiques à celles du premier exemple de réalisation.

De même, le réceptacle 8 est repris dans le dispositif de chauffage 10 selon le deuxième exemple. L'organe de mise à feu 9 avec ses composants élémentaires 91, 92 et 93 ainsi que le support 6 peuvent être utilisés dans le dispositif de chauffage selon le deuxième exemple.

Par rapport au premier exemple, le dispositif 10 selon le deuxième exemple comprend en outre un organe de rayonnement 7 est attaché au conduit d'échappement 3 au-dessus d'une extrémité libre 31 dudit conduit 3. Ici, l'organe de rayonnement 7 présente une section carrée et comprend quatre rebords 71 rabattus vers le bas, ici vers le sol. Cette structure de type chapeau de l'organe de rayonnement 7 permet de diriger de la chaleur vers le bas dans toutes les directions afin d'augmenter la surface de rayonnement du dispositif.

L'organe de rayonnement présente des dimensions, notamment une hauteur et une surface, pouvant varier en fonction des zones et des plantations. La distance d entre une extrémité basse 72 de l'organe de rayonnement 7 et l'extrémité libre 31 varie en fonction de la puissance du dispositif de chauffage. A titre d'exemple, la distance d peut être de l'ordre de 150 mm.

A titre illustratif, la hauteur du conduit d'échappement est dimensionnée de sorte que la hauteur H mesurée entre le sol et l'extrémité libre 31 du conduit d'échappement 3 soit de 1250 mm. Une telle hauteur H est supérieure à la hauteur de la plupart des vignes. Ainsi, la chaleur générée de la combustion est distribuée le long du corps des vignes, de la tête au pied.

### Troisième exemple de réalisation

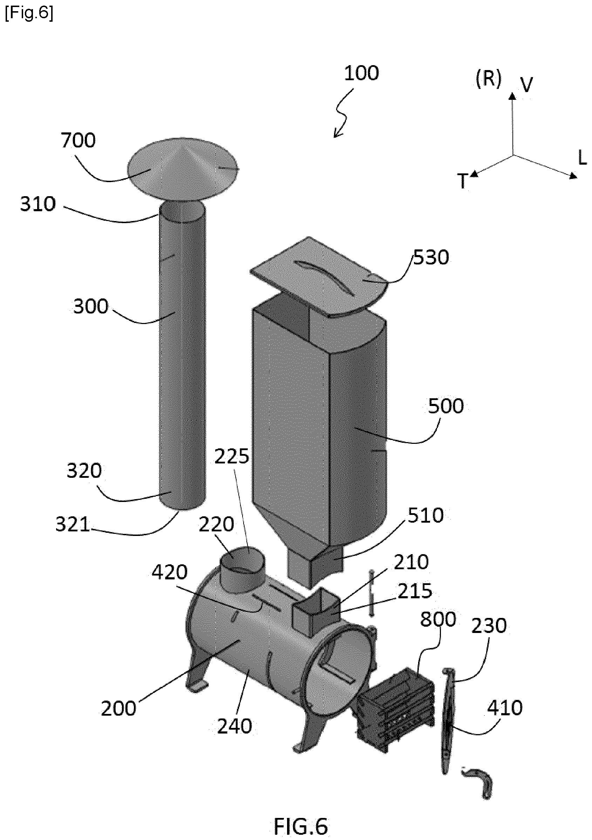

Les figures 6 à 10 illustrent un dispositif de chauffage 100 selon un troisième exemple de réalisation de l'invention. Comme dans les deux exemples précédents, le dispositif de chauffage 100 comprend une chambre de combustion 200, une trémie d'alimentation 500, un conduit d'échappement 300, et un réceptacle 800.

La trémie d'alimentation 500 comprend un couvercle 530 pour protéger le combustible principalement de l'humidité dans l'air. Un organe de rayonnement 700 est mis au-dessus du conduit d'échappement 300 de sorte à laisser un espace de distribution entre une extrémité supérieure 310 du conduit d'échappement 300 et l'organe de rayonnement 700.

A noter que l'organe de mise à feu 9 décrit précédemment peut tout à fait fonctionner avec le dispositif de chauffage 100.

Dans cet exemple, la chambre de combustion 200 présente une section transversale circulaire, et comprend une entrée d'alimentation 210 et une sortie 230. L'entrée 210 communique avec la trémie 500 tandis que la sortie 230 communique avec le conduit d'échappement 300. Pour réaliser la fixation de la trémie 500 sur la chambre de combustion 200, cette dernière est équipée d'un premier manchon de fixation 215 dans lequel s'emboîte une portion inférieure 510 de fixation de la trémie 500. En d'autres termes, la section de la portion inférieure 510 de fixation est complémentaire à celle du premier manchon 210.

De la même manière, pour fixer le conduit d'échappement 300 sur la chambre de combustion 200, celle-ci comprend un deuxième manchon de fixation 225 dans lequel s'emboîter une portion inférieure 320 de fixation du conduit d'échappement 300. La section du deuxième manchon 225 et la section de la portion inférieure 320 sont complémentaires.

Dans l'exemple illustré, la particularité des premier et deuxième manchons de fixation 215 et 225 est que leur bord supérieur respectif, formant respectivement l'entrée 210 et la sortie 220, présente dans la direction transversale une concavité correspondant à la courbure d'une deuxième paroi latérale 240 de la chambre de combustion. De cette manière, les chambres de combustion 2 de différents dispositifs de chauffage peuvent s'empiler les unes sur les autres en posant la deuxième paroi latérale 240 de la chambre du dessus sur les bords supérieurs des manchons 215 et 225 de la chambre du dessous.

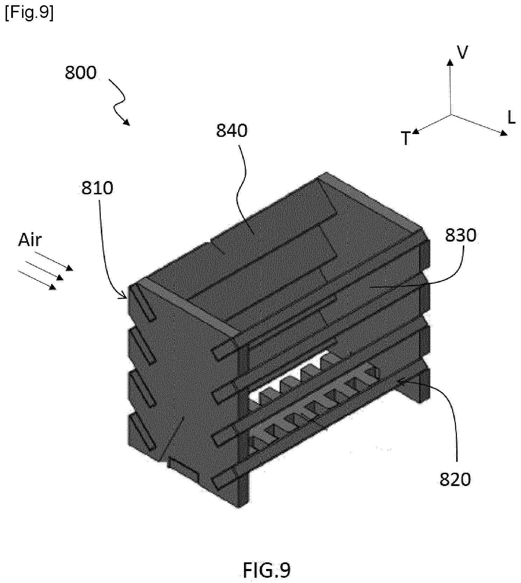

Comme illustré sur la figure 9, le dispositif de chauffage 100 comprend un réceptacle 800 présentant une section rectangulaire. Comme dans les exemples précédents, le réceptacle 800 comprend quatre faces s'étendant sensiblement selon la direction verticale, dont une face amont 810 et une face avale 820. Les faces amont et aval 820 comprennent chacun plusieurs plaques inclinées 840 et parallèles entre elles de manière à former des ouvertures traversantes 830.

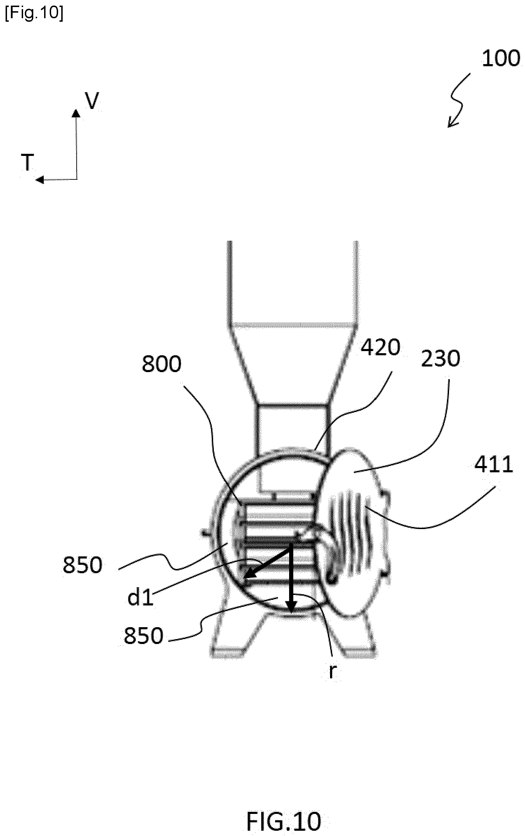

Comme dans les exemples précédents, le réceptacle 800 est disposé dans la chambre de combustion 200 de façon que la face amont 810 soit en vis-à-vis d'une première paroi 230 de la chambre 200 sur laquelle est réalisée une première zone d'échange d'air 411. Ici, la première paroi 230 est une paroi axiale située à droite de la figure 6 et formée d'une porte d'ouverture et de fermeture de la chambre de combustion 200. Quant à la première zone d'échange 411, celle-ci comprend plusieurs fentes traversantes s'étendant sensiblement selon l'axe vertical V, tel qu'illustré sur la figure 10.

Dans cet exemple, le réceptacle 800 et la chambre de combustion 200 sont dimensionnés de sorte que la demi-diagonales d1 du réceptacle 800 soit inférieure ou égale au rayon r de la chambre de combustion 200. De cette manière, lorsque le réceptacle 800 est mis dans la chambre de combustion 200, l'espace entre la section rectangulaire du réceptacle 800 et la section circulaire de la chambre 200 forme un canal d'air 850. Ce dernier présente les mêmes avantages que le canal d'air 85 présenté dans les exemples précédents. Par conséquent, on peut omettre la barre longitudinale 83 en V dans ce troisième exemple.

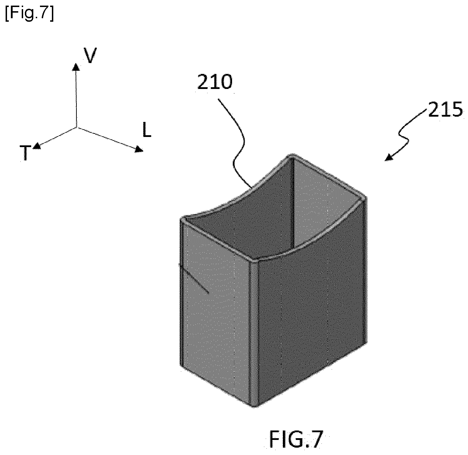

Comme observé sur les figures 6 et 7, le dispositif de chauffage 100 comprend une deuxième zone d'échange d'air 420 entre l'intérieur et l'extérieur du dispositif. Cette deuxième zone d'échange d'air 420 est pratiquée sur la deuxième paroi latérale 240 et située après le réceptacle 800.

Le dispositif de chauffage 100 comprend en outre une troisième zone d'échange d'air 430 qui est réalisée cette fois-ci sur le deuxième manchon de fixation 225. Bien entendu, la troisième zone d'échange d'air 430 est située en dessous de l'extrémité inférieure du conduit d'échappement 300 pour ne pas être obturée par ce dernier.

Les trois zones d'échange d'air 410 à 430 de cet exemple apportent les mêmes avantages que celles des deux exemples précédents, à savoir créer une combustion performante sans fumée en vue de produire une grande quantité de chaleur pour lutter, de manière efficace, contre les gelées saisonnières.

## Revendications

1. Dispositif de chauffage à combustion (1 ; 10 ; 100) comprenant :
- une chambre de combustion (2 ; 200),
- un réceptacle (8 ; 800) disposé dans la chambre de combustion (2 ; 200) et comprenant une enceinte (80) destinée à contenir une matière combustible, ladite enceinte (80) formant un foyer du dispositif de chauffage, et
- un conduit d'échappement (3 ; 300) communiquant avec la chambre de combustion (2 ; 200),
un gaz de combustion, formé de la combustion de la matière combustible, circulant du foyer vers le conduit d'échappement (3 ; 300) selon une direction de circulation (F) de l'amont vers l'aval,
- le réceptacle (8 ; 800) comprend une face amont (81 ; 810) et une face avale (82 ; 820) et chacune desdites faces comprenant des ouvertures traversantes (810) ;
- le réceptacle (8 ; 800) comprend une surface définissant au moins un côté d'un canal d'air (85 ; 850) dans lequel circule l'air provenant d'une première zone d'échange d'air (41 ; 410) ;
ledit dispositif (1 ; 10 ; 100) étant **caractérisé en ce que**
- la chambre de combustion (2 ; 200) comprend une première paroi (23 ; 230) disposée en vis-à-vis de la face amont (81 ; 810) et comprenant la première zone d'échange d'air (41 ; 410) entre l'extérieur et l'intérieur du dispositif de chauffage (1 ; 10 ; 100).

2. Dispositif (1 ; 10 ; 100) selon la revendication 1, **caractérisé en ce qu'**il comprend une deuxième zone d'échange d'air (42 ; 420) entre l'extérieur et l'intérieur du dispositif de chauffage (1 ; 10 ; 100), ladite deuxième zone d'échange (42 ; 420) étant pratiquée sur une deuxième paroi (24 ; 240) de la chambre de combustion (2 ; 200) et située en aval du réceptacle (8 ; 800).

3. Dispositif (1 ; 10 ; 100) selon la revendication 2, **caractérisé en ce qu'**il comprend une troisième zone d'échange d'air (43) du dispositif de chauffage (1 ; 10), ladite troisième zone d'échange (43) étant pratiquée sur le conduit d'échappement (3) ou sur une paroi de la chambre de combustion différente de la première paroi (23 ; 230).

4. Dispositif (1 ; 10 ; 100) selon l'une des revendications 1 à 3, **caractérisé en ce que** le réceptacle (8) comprend une barre (83) reliant la face amont (81) à la face avale (82), présentant une section transversale en U ou en V inversée, et définissant le canal d'air (85).

5. Dispositif (1 ; 10 ; 100) selon l'une des revendications 1 à 3, **caractérisé en ce que** le réceptacle (800) présente une section rectangulaire et la chambre de combustion (200) présente une section transversale circulaire, **en ce que** la demi-diagonale (d1) de la section rectangulaire du réceptacle (800) est inférieure au rayon (r) de la section circulaire de la chambre de combustion (200), et **en ce que** l'espace entre la section rectangulaire du réceptacle (800) et la section circulaire de la chambre de combustion (200) définissent le canal d'air (850) .

6. Dispositif (1 ; 10 ; 100) selon l'une des revendications précédentes, **caractérisé en ce qu'**il comprend un organe de mise à feu (9) électrique et/ou électronique, ledit organe comprenant un allume-feu (93) et un moyen d'activation (92) de l'allume-feu.

7. Dispositif (1 ; 10 ; 100) selon la revendication précédente, **caractérisé en ce que** l'organe de mise à feu (9) comprend un moyen de télécommunication destiné à recevoir des signaux de commande d'un terminal, et une centrale de commande.

8. Dispositif (1 ; 10 ; 100) selon la revendication précédente, **caractérisé en ce que** l'organe de mise à feu (9) comprend un capteur de température et d'hygrométrie communiquant avec la centrale de commande.

9. Procédé d'allumage d'un dispositif de chauffage (1 ; 10 ; 100) selon la revendication 7, **caractérisé en ce qu'**il comprend les étapes suivantes:
- réception des signaux de commande d'un terminal par le moyen de communication;
- traitement des signaux de commande par la centrale de commande ;
- démarrage du moyen d'activation (92) de l'allume-feu par la centrale de commande ; et
- allumage de l'allume-feu (93) par ledit moyen d'activation (92).

10. Procédé d'allumage d'un dispositif de chauffage selon la revendication 8, **caractérisé en ce qu'**il comprend les étapes suivantes :
- récupération et traitement des données du capteur de température et d'hygrométrie par la centrale de commande ;
- en fonction desdites données, démarrage du moyen d'activation (92) de l'allume-feu par la centrale de commande ; et
- allumage de l'allume-feu (93) par ledit moyen d'activation (92).

## Patentansprüche

1. Verbrennungsheizgerät (1; 10; 100), umfassend:
- eine Brennkammer (2; 200),
- eine Aufnahme (8; 800), die in der Brennkammer (2; 200) angeordnet ist und eine Umhüllung (80) umfasst, die dafür bestimmt ist, ein brennbares Material zu enthalten, wobei die Umhüllung (80) einen Feuerraum des Heizgeräts bildet, und
- eine Abgasleitung (3; 300), die mit der Brennkammer (2; 200) kommuniziert,
wobei ein Verbrennungsgas, das durch die Verbrennung des brennbaren Materials gebildet wird, von dem Feuerraum zu der Abgasleitung (3; 300) entlang einer Strömungsrichtung (F) von stromaufwärts zu stromabwärts strömt,
- die Aufnahme (8; 800) eine stromaufwärtige Fläche (81; 810) und eine stromabwärtige Fläche (82; 820) umfasst und jede der Flächen Durchgangsöffnungen (810) umfasst;
- die Aufnahme (8; 800) eine Oberfläche umfasst, die mindestens eine Seite eines Luftkanals (85; 850) definiert, in den Luft von einem ersten Luftaustauschbereich (41; 410) strömt;
wobei das Gerät (1; 10; 100) **dadurch gekennzeichnet ist, dass**
- die Brennkammer (2; 200) eine erste Wand (23; 230) umfasst, die gegenüber der stromaufwärtigen Fläche (81; 810) angeordnet ist und den ersten Luftaustauschbereich (41; 410) zwischen dem Äußeren und dem Inneren des Heizgeräts (1; 10; 100) umfasst.

2. Gerät (1; 10; 100) nach Anspruch 1, **dadurch gekennzeichnet, dass** es einen zweiten Luftaustauschbereich (42; 420) zwischen dem Äußeren und dem Inneren des Heizgeräts (1; 10; 100) umfasst, wobei der zweite Austauschbereich (42; 420) an einer zweiten Wand (24; 240) der Brennkammer (2; 200) ausgeführt ist und stromabwärts der Aufnahme (8; 800) angebracht ist.

3. Gerät (1; 10; 100) nach Anspruch 2, **dadurch gekennzeichnet, dass** es einen dritten Luftaustauschbereich (43) des Heizgeräts (1; 10) umfasst, wobei der dritte Austauschbereich (43) an der Abgasleitung (3) oder an einer Wand der Brennkammer, die sich von der ersten Wand (23; 230) unterscheidet, ausgeführt ist.

4. Gerät (1; 10; 100) nach einem der Ansprüche 1 bis 3, **dadurch gekennzeichnet, dass** die Aufnahme (8) einen die stromaufwärtige Fläche (81) mit der stromabwärtigen Fläche (82) verbindenden Steg (83) umfasst, der einen umgekehrten U- oder V-förmigen Querschnitt aufweist und den Luftkanal (85) definiert.

5. Gerät (1; 10; 100) nach einem der Ansprüche 1 bis 3, **dadurch gekennzeichnet, dass** die Aufnahme (800) einen rechteckigen Querschnitt aufweist und die Brennkammer (200) einen kreisförmigen Querschnitt aufweist, dass die Halbdiagonale (d1) des rechteckigen Querschnitts der Aufnahme (800) kleiner als der Radius (r) des kreisförmigen Querschnitts der Brennkammer (200) ist, und dass der Raum zwischen dem rechteckigen Querschnitt der Aufnahme (800) und dem kreisförmigen Querschnitt der Brennkammer (200) den Luftkanal (850) definiert.

6. Gerät (1; 10; 100) nach einem der vorstehenden Ansprüche, **dadurch gekennzeichnet, dass** es ein elektrisches und/oder elektronisches Befeuerungselement (9) umfasst, das Element umfassend einen Feueranzünder (93) und ein Aktivierungsmittel (92) für den Feueranzünder.

7. Gerät (1; 10; 100) nach dem vorstehenden Anspruch, **dadurch gekennzeichnet, dass** das Befeuerungselement (9) ein Telekommunikationsmittel, dass für ein Empfangen von Steuersignalen von einem Endgerät bestimmt ist, und eine Steuerzentrale umfasst.

8. Gerät (1; 10; 100) nach dem vorstehenden Anspruch, **dadurch gekennzeichnet, dass** das Befeuerungselement (9) einen Temperatur- und Feuchtigkeitsfühler umfasst, der mit der Steuerzentrale kommuniziert.

9. Verfahren zum Zünden eines Heizgeräts (1; 10; 100) nach Anspruch 7, **dadurch gekennzeichnet, dass** es die folgenden Schritte umfasst:
- Empfangen von Steuersignalen von einem Endgerät durch das Kommunikationsmittel;
- Verarbeiten von Steuersignalen durch die Steuerzentrale;
- Starten des Aktivierungsmittels (92) für den Feueranzünder durch die Steuerzentrale; und
- Zünden des Feueranzünders (93) durch das Aktivierungsmittel (92).

10. Verfahren zum Zünden eines Heizgeräts nach Anspruch 8, **dadurch gekennzeichnet, dass** es die folgenden Schritte umfasst:
- Abrufen und Verarbeiten der Daten des Temperatur- und Feuchtigkeitsfühlers durch die Steuerzentrale;
- in Abhängigkeit von den Daten, Starten des Aktivierungsmittels (92) für den Feueranzünder durch die Steuerzentrale; und
- Zünden des Feueranzünders (93) durch das Aktivierungsmittel (92).

## Claims

1. A combustion heater (1; 10; 100) comprising:
- a combustion chamber (2; 200),
- a receptacle (8; 800) arranged in the combustion chamber (2; 200) and comprising an enclosure (80) intended to contain a combustible material, the said enclosure (80) forming a fireplace of the heating device, and
- an exhaust conduit (3; 300) communicating with the combustion chamber (2; 200),
a combustion gas, formed from the combustion of the combustible material, flowing from the fireplace to the exhaust duct (3; 300) in a direction of flow (F) from upstream to downstream,
- the receptacle (8; 800) comprises an upstream face (81; 810) and a downstream face (82; 820) and each of said faces comprising through openings (810);
- the receptacle (8; 800) comprises a surface defining at least one side of an air channel (85; 850) in which air from a first air exchange zone (41; 410) flows;
said combustion heater (1; 10; 100) being **characterised in that**
- the combustion chamber (2; 200) comprises a first wall (23; 230) disposed opposite the upstream face (81; 810) and comprising the first air exchange zone (41; 410) between the outside and the inside of the combustion heater (1; 10; 100).

2. Combustion heater (1; 10; 100) according to claim 1, **characterized in that** it comprises a second air exchange zone (42; 420) between the outside and the inside of the combustion heater (1; 10; 100), the said second exchange zone (42; 420) being made on a second wall (24; 240) of the combustion chamber (2; 200) and located downstream of the receptacle (8; 800).

3. Combustion heater (1; 10; 100) according to claim 2, **characterized in that** it comprises a third air exchange zone (43) of the combustion heater (1; 10), said third exchange zone (43) being provided on the exhaust conduit (3) or on a wall of the combustion chamber different from the first wall (23; 230).

4. Combustion heater (1; 10; 100) according to any of claims 1 to 3, **characterised in that** the receptacle (8) comprises a bar (83) connecting the upstream face (81) to the downstream face (82), having an inverted U or V cross-section, and defining the air channel (85).

5. Combustion heater (1; 10 ; 100) according to one of claims 1 to 3, **characterized in that** the receptacle (800) has a rectangular cross-section and the combustion chamber (200) has a circular cross-section, that the half-diagonal (d1) of the rectangular cross-section of the receptacle (800) is smaller than the radius (r) of the circular cross-section of the combustion chamber (200), and that the space between the rectangular cross-section of the receptacle (800) and the circular cross-section of the combustion chamber (200) defines the air channel (850).

6. Combustion heater (1; 10; 100) according to one of the preceding claims, **characterised in that** it comprises an electrical and/or electronic ignition device (9), said device comprising a firelighter (93) and a means of activating (92) the firelighter.

7. Combustion heater (1; 10; 100) according to the preceding claim, **characterised in that** the ignition device (9) comprises a telecommunication means for receiving control signals from a terminal, and a control centre.

8. Combustion heater (1; 10; 100) according to the preceding claim, **characterised in that** the ignition member (9) comprises a temperature and hygrometry sensor communicating with the control centre.

9. A method of igniting a combustion heater (1; 10; 100) according to claim 7, **characterized in that** it comprises the following steps:
- receiving the control signals from a terminal by the communication means;
- processing the control signals by the control centre;
- starting the activation means (92) of the firelighter by the control centre; and
- igniting the firelighter (93) by said activation means (92).

10. A method of igniting a combustion heater according to claim 8, **characterised in that** it comprises the following steps:
- recovery and processing of the data from the temperature and hygrometry sensor by the control centre;
- according to said data, starting of the activation means (92) of the firelighter by the control centre; and
- ignition of the firelighter (93) by said activation means (92).
